# EUROPÄISCHE PATENTSCHRIFT

(11) **EP 3 745 003 B1**
(45) Veröffentlichungstag und Bekanntmachung des Hinweises auf die Patenterteilung: **01.07.2026**
(21) Anmeldenummer: 20177346.2
(22) Anmeldetag: 29.05.2020
(51) Int. Cl.: F16K 7/07, F16K 27/02

(54) **DOSIERVENTIL, MISCHEINRICHTUNG UND VERFAHREN ZUR VERMISCHUNG VON REAKTIVEN KOMPONENTEN SOWIE VERWENDUNG EINES DOSIERVENTILS**
METERING VALVE, MIXING DEVICE AND METHOD FOR MIXING REACTIVE COMPONENTS AND USE OF A METERING VALVE
SOUPAPE DE DOSAGE, DISPOSITIF DE MÉLANGE ET PROCÉDÉ DE MÉLANGE DE COMPOSANTS RÉACTIFS AINSI QU'UTILISATION D'UNE SOUPAPE DE DOSAGE

(30) Priorität: 31.05.2019 DE 102019114670
(43) Veröffentlichungstag der Anmeldung: 02.12.2020
(73) Patentinhaber: Fraunhofer-Gesellschaft zur Förderung der angewandten Forschung e.V., 80686 München (DE)
(72) Erfinder: Bauer, René, 46047 Oberhausen (DE); Deckert, Stephan, 46537 Dinslaken (DE); Hintemann, Damian, 48703 Stadtlohn (DE); Pape, Frank, 44536 Lünen (DE); Wack, Holger, 44137 Dortmund (DE)

(56) Entgegenhaltungen:
- WO-A1-2004/023010
- US-A- 3 132 665
- US-A- 3 865 133
- US-A- 4 846 810

## Beschreibung

Die Erfindung betrifft eine Mischvorrichtung zur zumindest im Wesentlichen rückstandsfreien Dosierung in einem Mischprozess gemäß Anspruch 1 sowie ein Verfahren zur Vermischung reaktiver Komponenten in einem Zwei- oder Mehrkomponentenmischprozess gemäß Anspruch 2.

Ein technisches und bevorzugtes Anwendungsgebiet der Erfindung liegt in der Verfahrenstechnik, speziell im Bereich der Mischtechnik und dort im Bereich der Vermischung reaktiver, flüssiger Stoffströme, insbesondere von niedrigviskosen Flüssigkeiten.

Für die Herstellung von Brandschutztüren beispielsweise werden Hydrogele zur Füllung von Scheibenzwischenräumen verwendet. Die Hydrogele dienen als sogenannte "Brandschutzflüssigkeit" und schützen im Brandfall die brandabgewandte Seite vor einer zu hohen Erhitzung. Verfahren zur Einbringung der Brandschutzflüssigkeit in Glaszwischenräume und Verfahren zur entsprechenden Weiterverarbeitung zu Brandschutzgläsern sind dem Fachmann aus dem Stand der Technik bekannt.

Als Brandschutzflüssigkeiten für den zuvor beschriebenen Anwendungszweck können Hydrogele eingesetzt werden, die nach dem Mechanismus der radikalischen Polymerisation hergestellt werden. Hierbei wird zunächst eine Lösung angesetzt, die aus Monomeren (Polykationen und Vernetzer), Wasser und Salzen besteht. Diese Lösung wird als "Gelmischung" bezeichnet. Eine zweite Lösung wird angesetzt, die aus Wasser und Radikalbildnern besteht. Diese Lösung wird als "Starterlösung" bezeichnet. Die beiden Lösungen werden anschließend miteinander in einem definierten Verhältnis vermischt und nach dem Mechanismus der radikalischen Polymerisation reagiert die Reaktionslösung zu einem Hydrogel ab, das dann aus dreidimensional vernetzen Polymerketten besteht und im Polymerkettengerüst Salz und Wasser eingelagert hat.

Beispielsweise bei der Einbringung von Hydrogelen als Brandschutzflüssigkeit in Glaszwischenräume oder auch bei der Einbringung der Hydrogele in sonstige Reaktionsgefäße werden Befüllsysteme eingesetzt, die eine Mischeinrichtung aufweisen, wobei es die Mischeinrichtung ermöglichen soll, Gelmischung und Starterlösung vorzugsweise kontinuierlich zu vermischen und die entstehende Reaktionslösung - vor der Vernetzung - in den Glaszwischenraum bzw. das Reaktionsgefäß zu überführen. Die Förderung von Gelmischung und Starterlösung in die Mischeinrichtung erfolgt durch Pumpen, die vorzugsweise unterschiedlich getaktet sind, um Gelmischung und Starterlösung nicht verhältnisgleich der Mischeinrichtung zuzuführen. Üblicherweise werden in solchen Mischeinrichtungen federbelastete Ventile oder andere Absperrorgane eingesetzt, die mechanische Einbauten in Form von schwerkraftbetätigten Absperrelementen, wie Kugeln oder Kegeln, aufweisen.

In der Praxis hat sich gezeigt, dass ein das reaktive Gemisch betreffender, rückstandsfreier Betrieb von Mischeinrichtungen mit rein schwerkraftbetriebenen Schließelementen oft nicht möglich ist. Auch nach Spülung der Mischreinrichtung mit Gelmischung oder Wasser verbleiben am Ende eines Dosiervorgangs geringe Mengen des reaktiven Gemisches in Toträumen der Schließelemente, was dann zur Bildung von Hydrogel führt. Durch das entstehende Hydrogel wird die Funktionsfähigkeit des Schließelements eingeschränkt oder es kommt zu einem völligen Funktionsverlust, was aufwändige Reinigungsarbeiten bzw. einen Austausch des Schließelementes zur Folge hat. Auch im Falle nur kleiner Hydrogelanhaftungen in federbelasteten Ventilen oder anderen Absperrorganen der Mischeinrichtung kann es zu Prozessschwierigkeiten kommen, da sich diese Hydrogelanhaftungen ablösen können. Beispielsweise im Falle der Einbringungen von Brandschutzflüssigkeit in Glaszwischenräume können abgelöste Hydrogelanhaftungen in Glaszwischenräume ausgetragen werden, so dass es zu einer Abweichung der tatsächlichen von der gewünschten Produktqualität und zu einer Fehlproduktion kommen kann.

Die US 3,865,133 A offenbart eine Mischvorrichtung mit zwei nach dem Schlaucherweiterungsprinzip arbeitenden Dosierventilen. Schlauchartige Verschlusselemente der Dosierventile sind dabei zwischen einem Dosierrohr einerseits und einem Gehäuseteil der Mischvorrichtung andererseits eingeklemmt.

Aus der US 4,846,810 A geht eine Ventilanordnung hervor, die einen langgestreckten Ventilkörper sowie ein umfangseitig am Ventilkörper aufgebrachtes schlauchförmiges Verschlusselement aufweist.

Die WO 2004/023010 A1 offenbart ein Dosierventil, welches in eine rohrförmige Leitung eingesetzt ist. Das Dosierventil weist ein schlauchförmiges Verschlusselement auf, welches umfangseitig an einem Dosierrohr angeordnet ist.

Aus der US 3,132,665 A geht ein Dosierventil hervor, welches ein Dosierrohr sowie ein außenseitig am Dosierrohr aufgebrachtes Verschlusselement umfasst.

Vor diesem Hintergrund liegt der Erfindung die Aufgabe zugrunde, eine Mischeinrichtung mit einem Dosierventil sowie ein Verfahren zur Vermischung reaktiver Komponenten in einem Zwei- oder Mehrkomponenten-Mischprozess zur Verfügung zu stellen, wobei eine vorzugsweise zumindest im Wesentlichen rückstandsfreie Dosierung einer reaktiven Komponente und eine hohe Prozesssicherheit beim Betrieb der Mischeinrichtung ermöglicht werden sollen.

Die vorgenannte Aufgabe wird erfindungsgemäß durch eine Mischeinrichtung mit den Merkmalen von Anspruch 1 und ein Verfahren mit den Merkmalen von Anspruch 2 gelöst.

Erfindungsgemäß wird ein Dosierventil als zumindest im Wesentlichen totraumfreies und selbstschließendes Absperrorgan zur vorzugsweise zumindest im Wesentlichen rückstandsfreien Dosierung einer reaktiven Komponente und/oder eines reaktiven Komponentengemisches in einem Zwei- oder Mehrkomponenten-Mischprozess eingesetzt, bei dem eine chemische und/oder physikalische Reaktion von reaktiven Komponenten zu einer Vernetzung führt, weiter insbesondere einem Mischprozess, bei dem eine chemische und/oder physikalische Reaktion der Komponenten zur Bildung von Hydrogel führt, wobei das Dosierventil wenigstens ein Dosierrohr und wenigstens ein auf einem Dosierrohr aufgebrachtes, elastisches, schlauchförmiges Verschlusselement aufweist, wobei das Verschlusselement in einem Schließ- oder Ruhezustand des Dosierventils wenigstens eine Austrittsöffnung des Dosierrohrs gegen den Austritt eines in dem Dosierrohr anstehenden Flüssigkeitsstroms verschließt und in einem Dosierbetrieb des Dosierventils unter einem Dosierdruck des Flüssigkeitsstroms reversibel aufweitbar ist, um den Abfluss des Flüssigkeitsstroms über die Austrittsöffnung zu ermöglichen.

In einem Schließzustand des Dosierventils verschließt das Verschlusselement wenigstens eine Durchgangsbohrung des Dosierrohrs gegen den Austritt eines in dem Dosierrohr anstehenden Flüssigkeitsstroms einer reaktiven Komponente und/oder eines reaktiven Komponentengemisches und ist in einem Dosierbetrieb des Dosierventils unter einem Dosierdruck des Flüssigkeitsstrom reversibel erweiterbar, um den Abfluss des Flüssigkeitsstroms über die Durchgangsbohrung und den Bereich zwischen dem Verschlusselement und der Dosierrohraußenseite in ein Umgebungsmedium und/oder ein Reaktionsgefäß zu ermöglichen. Der Erfindung liegt der Grundgedanke zugrunde, die Zusammenführung von wenigstens zwei reaktiven Komponenten und/oder von wenigstens zwei reaktiven Komponentengemischen und eine im Wesentlichen rückstandsfreie Dosierung von wenigstens einer reaktiven Komponente in eine andere reaktive Komponente unter Einsatz eines Ventils durchzuführen, das nach dem sogenannten "Schlaucherweiterungsprinzip" arbeitet.

Erstmals mit der Erfindung wird ein Dosierventil eingesetzt, das als prozesssicheres Absperrorgan in Mischreinrichtungen zur rückstandsfreien Vermischung mehrerer reaktiver Flüssigkeitsströme geeignet ist, insbesondere beim Einsatz von niedrigviskosen, wasserähnlichen Flüssigkeiten. Durch den Einsatz des erfindungsgemäßen Dosierventils in einer Mischeinrichtung kann auf bewegliche, verschleißempfindliche und korrosionsempfindliche Bauteile zur Dosierung verzichtet werden. Von Vorteil hierbei ist, dass das erfindungsgemäße Dosierventil eine im wesentliche totraumfreie und rückstandsfreie Dosierung ohne bewegliche mechanische Einbauten in Form von Kugeln, Kegeln oder Federn zulässt. Der einfache konstruktive Aufbau des Dosierelementes lässt zudem eine wirtschaftliche (Serien-)Fertigung zu. Das Dosierelement zeichnet sich im Übrigen durch einen robusten und widerstandsfähigen Aufbau aus und lässt sich im Bedarfsfall einfach austauschen.

Das erfindungsgemäße Verfahren sieht dementsprechend eine Vermischung reaktiver Komponenten in einem Zwei- oder Mehrkomponenten-Mischprozess vor, bei dem eine chemische und/oder physikalische Reaktion der Komponenten zu einer Vernetzung führt, nämlich einem Mischprozess, bei dem eine chemische und/oder physikalische Reaktion der Komponenten zur Bildung von Hydrogel führt, wobei ein Stoffstrom einer reaktive Komponente und/oder eines reaktiven Komponentengemisches mit wenigstens einem nach dem Schlaucherweiterungsprinzip arbeitenden Dosierventil in den Stoffstrom einer weiteren reaktiven Komponente oder den Stoffstrom eines weiteren reaktiven Komponentengemisches dosiert wird.

Eine Verwendung betrifft weiter den Einsatz eines nach dem Schlaucherweiterungsprinzip arbeitenden Dosierventils in einer Mischeinrichtung zur vorzugsweise zumindest im Wesentlichen rückstandsfreien Dosierung einer reaktiven Komponente und/oder eines reaktiven Komponentengemisches in einem Zwei- oder Mehrkomponenten-Mischprozess, bei dem eine chemische und/oder physikalische Reaktion von reaktiven Komponenten zu einer Vernetzung führt, nämlich einem Mischprozess, bei dem eine chemische und/oder physikalische Reaktion der Komponenten zur Bildung von Hydrogel führt.

In Zusammenhang mit der Erfindung durchgeführte Versuche haben bestätigt, dass die Verwendung eines nach dem Schlaucherweiterungsprinzip arbeitenden Dosierventils einen das reaktive Gemisch betreffenden rückstandsfreien Betrieb einer Mischeinrichtung ermöglicht. Nach Spülung der Mischeinrichtung mit beispielsweise einer reaktiven Komponente und/oder beispielsweise mit Wasser verbleiben nach dem Ende eines Dosiervorgangs keine Mengen an reaktivem Gemisch in der Mischeinrichtung, so dass auch keine Vernetzung von Gemischresten in der Mischeinrichtung mit den damit verbundenen Schwierigkeiten zu befürchten ist.

Bevorzugte Anwendungsbereiche der Erfindung sind jedwede Zwei- oder Mehrkomponentenvernetzungsprozesse, bei denen eine chemische und/oder physikalische Reaktion zu einer Vernetzung führt (chemisch-kovalent oder physikalisch, beispielsweise durch Van-der-Waals-Kräfte). Bei Einsatz von an sich aus dem Stand der Technik bekannten Absperrorganen mit beweglichen mechanischen Einbauten in Form von Kugeln, Kegeln oder Federn oder dergleichen kann es leicht zur Verblockung durch das Reaktionsprodukt kommen. Einer solchen Verblockung wird durch den Einsatz eines erfindungsgemäßen Dosierventils mit einem sich unter Dosierdruck reversibel erweiternden schlauchförmigen Verschlusselement vorgebeugt.

Beispiele für bevorzugte Anwendungsbereiche des erfindungsgemäßen Dosierventils sind beispielsweise die Herstellung von Hydrogelen, wie Superabsorbern, durch radikalische Polymerisation und die Komplexierung von Natriumalginat mit Kalziumchlorid sowie die Dosierung von Zweikomponenten-Polyurethan-Klebern. In Zusammenhang mit der Herstellung von Reaktionslösungen, die durch Vermischung einer Gelmischung als erster reaktiver Komponente und einer Starterlösung als zweiter reaktiver Komponente erhalten werden, kann das erfindungsgemäße Dosierventil insbesondere zur Dosierung der Starterlösung in einen Stoffstrom der Gelmischung eingesetzt werden.

Im Dosierbetrieb wird das Verschlusselement unter einem bestimmten Dosierdruck eines im Inneren des Dosierrohrs anstehenden Fluides ausgehend von einem an dem Dosierrohr fixierten Ende des Verschlusselements in Richtung zu einem freien Ende des Verschlusselements aufgeweitet, so dass das Fluid austreten kann. Bei Druckentlastung legt sich das Verschlusselement wieder von dem fixierten Ende ausgehend in Richtung zum freien Ende an das Dosierrohr an. Dies wird durch die elastischen Rückstellkräfte des Verschlusselements und den Druck des äußeren Umgebungsmediums bewirkt. Wenn sich das Verschlusselement von der Fixierungsseite aus in Richtung zu einem Dosierrohrende des Dosierrohrs wieder an das Dosierrohr anlegt, werden Restmengen von zwischen dem Verschlusselement und der Außenfläche des Dosierrohrs vorhandenem Fluid in das umgebende Medium gepresst und das Verschlusselement verschließt die Durchgangsbohrung des Dosierrohrs. Damit ist eine im Wesentlichen totraumfreie Dosierung des Fluides gewährleistet.

Das Dosierrohr weist über den Umfang verteilt angeordnete Durchgangsbohrungen als Austrittsöffnungen auf. Damit sind bei der Dosierung ein gleichmäßiger Fluidaustritt aus dem Dosierrohr und ein gleichmäßiges Aufweiten des Verschlusselementes über den Dosierrohrumfang sichergestellt.

Gegenüberliegend zum geschlossenen Dosierrohrende weist das Dosierrohr einen vorzugsweise zylindrischen Anschlussbereich zum Einschrauben, Einschweißen und/oder Einkleben in ein Rohrleitungsanschlussstück auf. Dies ermöglicht eine einfachen Montage und einen einfachen Anschluss des Dosierrohrs an ein Rohrleitungssystem einer erfindungsgemäßen Mischeinrichtung. Der Anschlussbereich weist vorzugsweise einen gegenüber dem Durchmesser des Dosierrohrs im Bereich des Verschlusselements vergrößerten Dosierrohrdurchmesser auf.

Zur Befestigung an dem Dosierrohr ist das Verschlusselement an seinem fixierten Ende auf eine als Umfangswulst ausgebildete Erweiterung an der Dosierrohraußenseite aufgezogen und vorzugsweise lediglich über die Erweiterung an dem Dosierrohr gegen Abrutschen festgesetzt. Damit ist eine einfache und kostengünstige Fertigung des erfindungsgemäßen Dosierventils möglich. Das Verschlusselement kann sich von dem fixierten Ende bis zu dem Anschlussbereich des Dosierrohrs erstrecken und somit im Ergebnis in Richtung zum Anschlussbereich über die Erweiterung an der Dosierrohraußenseite überstehen.

Im Schließzustand liegt das Verschlusselement über seine gesamte Länge, vorzugsweise jedoch jedenfalls von der Erweiterung an dem Dosierrohr, an der das Verschlusselement festgesetzt ist, bis zu seinem freien Ende zumindest im Wesentlichen vollflächig gegen das Dosierrohr an. Damit wird sämtliches Fluid am Ende eines Dosiervorgangs von dem sich wieder an das Dosierrohr anlegenden Verschlusselement wirkungsvoll nach außen gepresst und es verbleiben am Ende eines Dosiervorgangs keine relevanten Mengen des Fluides in dem Bereich zwischen dem Dosierrohr und dem Verschlusselement.

An seinem freien Ende weist das Verschlusselement ein offenes Schlauchende auf, was das Herauspressen sämtlichen Fluides in ein umgebendes Medium am Ende eines Dosiervorgangs vereinfacht und sicherstellt. Vorzugsweise schließt das Schlauchende bündig mit dem Dosierrohrende ab. Damit wird das Anhaften von Fluidresten am freien Ende des Verschlusselementes erschwert. Grundsätzlich kann es aber auch vorgesehen sein, dass sich das Schlauchende lediglich in den randnahen Bereich des Dosierrohrendes erstreckt oder auch über das Dosierrohrende vorzugsweise lediglich geringfügig übersteht.

Das Verschlusselement besteht aus einem vernetzten Elastomer, einem thermoplastischen Elastomer oder einem Silikon und/oder weist ein vernetztes Elastomer, ein thermoplastisches Elastomer oder ein Silikon auf. Die Härte des Verschlusselementes nach DIN-ISO 7619-1 beträgt zwischen 10 Shore-A bis 90 Shore-A, vorzugsweise zwischen 20 Shore-A bis 75 Shore-A. Im Rahmen der Erfindung durchgeführte Versuche haben bestätigt, dass hohe elastische Rückstellkräfte des Verschlusselementes abhängen von der Materialhärte, wobei erfindungsgemäß hohe elastische Rückstellkräfte derart erreicht werden sollen, dass sich das Verschlusselement nach dem druckbedingten Aufweiten während des Dosierbetriebs am Ende des Dosierbetriebs nach einem Druckabbau wieder selbsttätig an das Dosierrohr anlegt und die Austrittsöffnung des Dosierrohrs selbsttätig verschließt. Ist die Materialhärte zu hoch gewählt, kommt es nicht zu einer ausreichenden Aufweitung des Verschlusselementes während des Dosierbetriebs bzw. der Dosierdruck muss sehr hoch gewählt sein, was verfahrenstechnisch von Nachteil ist. Ist die Härte des Verschlusselementes zu gering, kann nicht sichergestellt werden, dass es zu einer selbstdichtenden Anlage des Verschlusselementes gegen das Dosierrohr und zu einem selbsttätigen im Wesentlichen vollständigen Verschließen der Austrittsöffnung des Dosierrohrs am Ende des Dosierbetriebs kommt. Gleichzeitig werden alle Flüssigkeitsreste durch das sich anlegende Verschlusselement nach außen gepresst.

Für die Herstellung des Dosierrohrs können alle vergießbaren, thermoplastisch formoder spritzbaren oder spanend bearbeitbaren Werkstoffe, wie Metall, Glas, Gummi, Holz, Kunststoff, Keramik oder auch Verbundwerkstoffe, vorzugsweise aufweisend Kunststoff und/oder Metalle, eingesetzt werden. Beispielsweise kann das Dosierrohr aus PVC bestehen.

In Zusammenhang mit der Herstellung von Reaktionslösungen, die durch Vermischung einer Gelmischung als erster reaktiver Komponente und einer Starterlösung als zweiter reaktiver Komponente erhalten werden, stellt insbesondere der Einsatz der Gelmischung hohe werkstoffliche Anforderungen an die bei der erfindungsgemäßen Mischeinrichtung eingesetzten Materialien. Durch den Einsatz von korrosiven Salzen ist die Verwendung von Kunststoffen für Behälter, Rohrleitungen und Einbauten notwendig. Alle Metalle müssen aus hochlegierten Stählen bestehen bzw. durch Beschichtungen beschützt werden.

Material und Wandstärke des Schlauchmaterials, aus dem das Verschlusselement besteht, sind vorzugsweise so gewählt, dass das Verschlusselement zum reversiblen Aufweiten unter einem Dosierdruck zwischen 0,2 bis 80 bar, vorzugsweise von mehr als 0,5 bar, weiter vorzugsweise von mehr als 1,0 bar und besonders bevorzugt von mehr als 10,0 bar, und/oder besonders bevorzugt bis 40 bar, ausgebildet ist.

In Abhängigkeit von der Materialwahl kann das erfindungsgemäße Dosierventil ausgelegt sein für eine Betriebstemperatur zwischen minus 60 °C und bis plus 200 °C, vorzugsweise zwischen minus 20 °C bis plus 100 °C. Der Durchmesser des erfindungsgemäßen Dosierrohrs kann beispielsweise im Bereich zwischen 3 mm bis 130 mm, vorzugsweise bis 20 mm, liegen.

Zur Sicherstellung eines rückstandsfreien Dosierens ist nach Beendigung eines Dosiervorgangs vorzugsweise vorgesehen, den Fluiddruck im Dosierventil abzusenken. Die erfindungsgemäße Mischeinrichtung weist wenigstens einen mit dem Dosierventil fluidisch verbundenen Vorlagebehälter für eine reaktive Komponente, beispielsweise eine Starterlösung, auf. Für eine Druckentlastung am Ende eines Dosiervorgangs ist eine Rückführung der reaktiven Komponente in den Vorlagebehälter vorgesehen. Alternativ ist vorgesehen, die reaktive Komponente über einen Pumpenbypass in einen Leitungsabschnitt der Mischeinrichtung vor eine zum Zuführen der reaktiven Komponente zum Dosierventil vorgesehene Pumpe rückzuführen. Die Erfindung wird nachfolgend beispielhaft anhand der Zeichnung erläutert. In der Zeichnung zeigen:
- Fig. 1: eine schematische Darstellung eines aus dem Stand der Technik bekannten schwerkraftbetriebenen Schließelements von vorne nach einem Dosiervorgang einer Starterlösung in den Fluidstrom einer Gelmischung mit am Austritt aus dem Schließelement gebildeten Hydrogelanhaftungen;
- Fig. 2: eine Querschnittsansicht eines Dosierventils vor Beginn eines Dosiervorgangs;
- Fig. 3: eine Querschnittsansicht des in Fig. 2 gezeigten Dosierventils während eines Dosiervorgangs;
- Fig. 4: eine perspektivische Ansicht eines Anschlussstücks zum Anschluss an eine Rohrleitung mit einem in das Anschlussstück eingesetzten erfindungsgemäßen Dosierventil schräg von oben;
- Fig. 5: eine schematische Ansicht einer erfindungsgemäßen Mischeinrichtung mit einem Dosierventil;
- Fig. 6: ein schematisches Verfahrensfließbild, das eine erste konstruktive Ausführungsform zum Druckabbau in einem Dosierventil am Ende eines Dosiervorgangs zeigt, und
- Fig. 7: ein schematisches Verfahrensfließbild einer zweiten konstruktiven Ausführungsform zum Druckabbau in einem Dosierventil am Ende eines Dosiervorgangs.

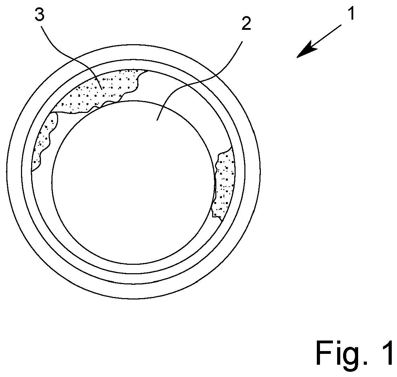

Die Herstellung von Hydrogelen kann wie folgt ablaufen. Zunächst wird eine Gelmischung angesetzt, die aus Monomeren (Polykationen und Vernetzer), Wasser und Salzen besteht. Eine Starterlösung wird angesetzt, die aus Wasser und Radikalbildnern besteht. Die Gelmischung und die Starterlösung werden anschließend miteinander in einem definierten Verhältnis in einer Mischeinrichtung vermischt und nach dem Mechanismus der radikalischen Polymerisation reagiert die Reaktionslösung zu einem Hydrogel ab, das dann aus dreidimensional vernetzen Polymerketten besteht und im Polymerkettengerüst Salz und Wasser eingelagert hat. Fig. 1 zeigt ein aus dem Stand der Technik bekanntes schwerkraftbetriebenes Schließelement 1 mit einer Kugel 2 als Absperrelement in einer Vorderansicht nach der Dosierung der Starterlösung in den Fluidstrom der Gelmischung.

Nach Beendigung des Dosiervorgangs verbleiben Reste der Starterlösung im und/oder am Schließelement, was zur Ausbildung von Hydrogelanhaftungen 3 im Austrittsbereich des Schließelements 1 führt. Die Hydrogelanhaftungen 3 können das Schließelement 1 verblocken und aufwändige Reinigungsarbeiten bzw. einen Austausch des Schließelements 1 erforderlich machen. Selbst wenn der Hydrogelrückstand lediglich in einer geringen Menge vorliegt, kann dies zu Prozessschwierigkeiten führen, wenn sich Hydrogelanhaftungen 3 ablösen und in das Umgebungsmedium und/oder ein Reaktionsgefäß ausgetragen werden.

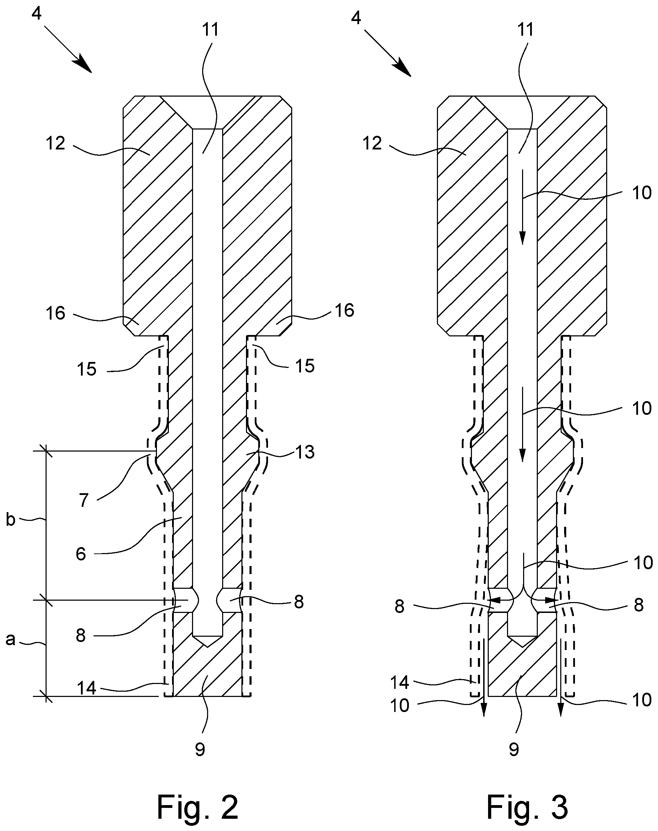

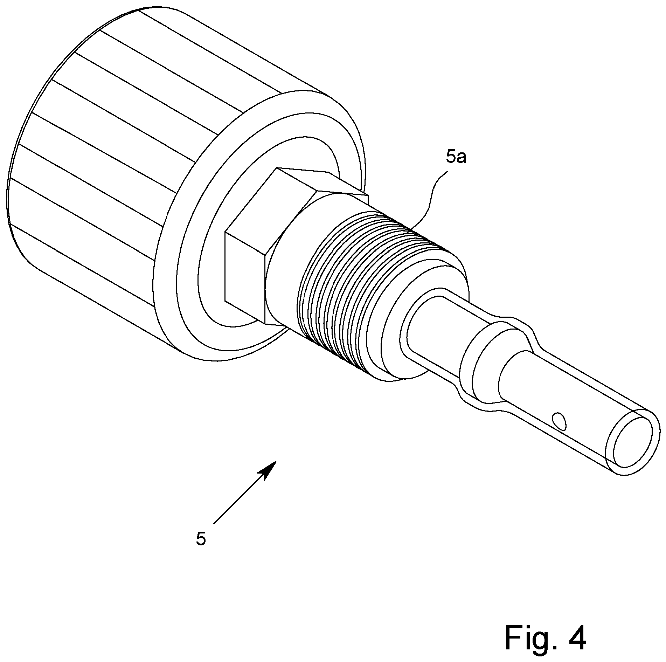

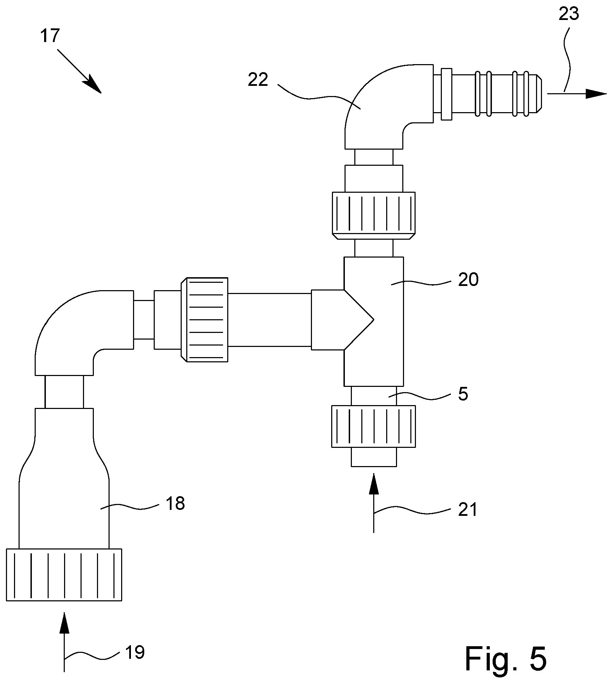

In den Figuren 2 bis 4 ist ein Dosierventil 4 als im Wesentlichen totraumfreies und selbstschließendes Absperrorgan dargestellt. Das Dosierventil 4 kann in ein lediglich beispielhaft in Fig. 4 gezeigtes Verbindungsstück 5 zum Anschluss an ein Rohleitungssystem einer in Fig. 5 gezeigten Mischeinrichtung 17 eingeklebt, eingeschraubt und/oder eingepresst sein. Das Verbindungsstück 5 kann ein Außengewinde 5a zum Einschrauben in ein komplementäres Innengewinde eines Rohrverbindungsstücks 20 (Fig. 5) der Mischeinrichtung 17 aufweisen.

Das Dosierventil 4 arbeitet nach dem sogenannten "Schlaucherweiterungsprinzip" und weist ein auf einem Dosierrohr 6 aufgebrachtes elastisches, schlauchförmiges Verschlusselement 7 auf. In einem Schließzustand des Dosierventils 4 verschließt das Verschlusselement 7 zwei Durchgangsbohrungen 8 in dem Dosierrohr 6 gegen den Austritt eines in dem Dosierrohr 6 anstehenden Fluides. In einem Dosierbetrieb des Dosierventils 4 kommt es dagegen aufgrund des Flüssigkeitsdrucks in dem Dosierrohr 6 zu einer reversiblen Erweiterung des Verschlusselements 7, was den Abfluss des Fluides über die Durchgangsbohrungen 8 und den Bereich zwischen der Außenfläche des Dosierrohrs 6 und der Innenfläche des Verschlusselements 7 nach vorne in Richtung zu einem Dosierrohrende 9 ermöglicht. Dies ist in Fig. 3 schematisch durch die Pfeile 10 gezeigt. Fig. 2 zeigt dagegen das Dosierventil 4 vor Beginn des Dosiervorgangs in einem Ruhe- bzw. Schließzustand, wenn das Verschlusselement 7 die über den Umfang des Dosierrohrs 6 verteilt angebrachten Durchgangsbohrungen 8 verschließt.

Wie sich weiter aus den Figuren 2 bis 4 ergibt, ist das Dosierrohr 6 an dem Dosierrohrende 9 axial geschlossen, wobei das Dosierventil 4 einen Dosierkanal 11 aufweist, der sich lediglich bis zu den Durchgangsbohrungen 8 erstreckt. Gegenüberliegend zum geschlossenen Dosierrohrende 9 weist das Dosierrohr 6 einen zylindrischen außengewindefreien Anschlussbereich 12 zum Einschweißen und/oder Einkleben des Dosierventils 4 in ein Rohranschlussstück 5 auf. Nicht im Einzelnen gezeigt ist, dass der Anschlussbereich 12 auch ein Außengewinde aufweisen kann, um das Einschrauben in einen entsprechend ausgebildeten Innengewindeabschnitt eines Rohranschlussstücks zu ermöglichen.

Um das Abrutschen des Verschlusselements 7 in Richtung des Flüssigkeitsaustritts bzw. in Richtung des Dosierrohrendes 9 während des Dosiervorgangs zu verhindern, weist das Dosierrohr 6 benachbart zu dem Anschlussbereich 12 eine Durchmessererweiterung 13 auf. Das Verschlusselement 7 wird im Ergebnis vorzugsweise lediglich durch die elastischen Rückstellkräfte des Schlauchmaterials, aus dem das Verschlusselement 7 besteht, an dem Dosierrohr 6 gehalten und fixiert. Unter einem ausreichend hohen Dosierdruck wird das Verschlusselement 7 ausgehend von den Durchgangsbohrungen 8 in Richtung zu einem freien Ende des Verschlusselements 7 aufgeweitet und legt sich bei Druckentlastung ausgehend von den Durchgangsbohrungen 8 in Richtung zu dem freien Ende wieder an das Dosierrohr 6 an. Hierbei wird sämtliche reaktive Flüssigkeit, die sich am Ende eines Dosiervorgangs noch zwischen dem Verschlusselement 7 und dem Dosierrohr 6 befindet, zwischen dem Verschlusselement 7 und dem Dosierrohr 6 nach außen gepresst, so dass die Bildung von Hydrogelanhaftungen am Dosierrohr 6 wirkungsvoll verhindert wird.

Weiter vorzugsweise schließt das Schlauchende 14 bündig mit dem Dosierrohrende 9 ab. Hierdurch wird das Risiko verringert, dass es am Ende eines Dosiervorgangs zum Anhaften von kleinen Mengen des reaktiven Gemisches am Schlauchende 14 und/oder am Dosierrohrende 9 und der Bildung unerwünschter Reaktionsprodukte in diesem Bereich kommt.

An dem gegenüberliegenden Schlauchende 15 kann das Verschlusselement 7 vorzugsweise gegen den Anschlussbereich 12 anliegen bzw. so weit auf das Dosierrohr 6 aufgezogen sein, dass zwischen einer Schulter 16 des Anschlussbereichs 12 und dem Schlauchende 15 des Verschlusselements 7 kein Spalt verbleibt.

Im Ruhe- bzw. Schließzustand liegt das Verschlusselement 7 vorzugsweise über seine gesamte Länge von dem Schlauchende 15 bis zu seinem freien Schlauchende 14 zumindest im Wesentlichen vollflächig gegen die Außenfläche des Dosierrohrs 6 an. Damit wird ein Flüssigkeitsaustritt im Ruhezustand des Dosierventils 4 über die Durchgangsbohrungen 8 vollständig ausgeschlossen.

Um eine sichere Fixierung des Verschlusselements 7 an dem Dosierrohr 6 zu ermöglichen, ist der Bereich der Durchmessererweiterung 13 vorzugsweise im Wesentlichen mittig zwischen dem axialen Ende des Anschlussbereichs 12 und den Durchgangsbohrungen 8 vorgesehen. Der Abstand zwischen der Durchmessererweiterung 13 und dem Anschlussbereich 12 einerseits und der Abstand zwischen der Durchmessererweiterung 13 und den Durchgangsbohrungen 8 andererseits ist damit zumindest im Wesentlichen gleich groß. Hierdurch wird das Abrutschen des Verschlusselements 7 in Richtung des Flüssigkeitsaustritts wirkungsvoll verhindert. Weiterhin ist eine zusätzliche Abrutschsicherung durch Überwurfmuttern oder Klemmverbindungen möglich.

Vorzugsweise ist es so, dass der Abstand a zwischen einer Austrittsöffnung bzw. Durchgangsbohrung 8 und dem Dosierrohrende 9 kleiner ist als der Abstand b zwischen der Durchmessererweiterung 13 und der Austrittsöffnung bzw. Durchgangsbohrung 8. Weiter vorzugsweise entspricht der Abstand b zwischen der Durchmessererweiterung 13 und einer Austrittsöffnung 8 des Dosierrohrs 6 (jeweils bezogen auf eine Mittelquerachse durch die Durchmessererweiterung 13 und eine Mittelquerachse durch eine Austrittsöffnung 8) wenigstens dem 1,3-Fachen, vorzugsweise wenigstens dem 1,4-Fachen und weiter vorzugsweise wenigstens dem 1,5-Fachen des Abstands a zwischen einer Austrittsöffnung 8 und dem Dosierrohrende 9. Damit ist sichergestellt, dass sich das Verschlusselement 7 bei Erreichen eines ausreichend hohen Dosierdrucks im Dosierkanal 11 ausgehend von den Durchgangsbohrungen 8 in Richtung zum Dosierrohrende 9 bzw. zu dem freien Schlauchende 14 hin aufweitet und das reaktive Gemisch nicht in der anderen Richtung zur Fixierungsstelle des Verschlusselements 7 strömt.

Das Dosierrohr 6 kann abweichend zu den in den Figuren 2 bis 4 gezeigten Ausführungsformen auch ein spitz zulaufendes Dosierrohrende 9 aufweisen.

Das Dosierrohr 6 ist vorzugsweise einstückig ausgebildet und kann beispielsweise aus Polyvinylchlorid bestehen. Als Werkstoff für das Verschlusselement 7 kann Silikon ausgewählt sein. Das Dosierventil 4 besteht im Ergebnis vorzugsweise lediglich aus zwei Bauteilen, was eine wirtschaftliche industrielle Herstellung in Serie ermöglicht. Von Vorteil hierbei ist insbesondere der Verzicht auf bewegliche, verschleißempfindliche und korrosionsempfindliche Bauteil-Komponenten. Im Übrigen zeichnet sich das Dosierventil 4 durch eine hohe Robustheit im Betrieb aus und lässt sich im Bedarfsfall einfach austauschen.

In der Ausführungsform mit einem Dosierrohr 6 aus Polyvinylchlorid kann das Dosierventil 4 auf einen Dosierdruck von vorzugsweisen wenigstens 10 bar und/oder eine Betriebstemperatur von wenigstens 20 °C ausgelegt sein. Betriebs- bzw. Dosierdrücke bis 100 bar sind aber erreichbar mit Bauteilen aus Metall.

In einem Versuchsbetrieb hat das beschriebene Dosierventil 4 ausgezeichnete Eigenschaften zur Dosierung beispielsweise einer Starterlösung, die aus Wasser und Radikalbildnern besteht, in eine Gelmischung, die aus Monomeren (Polykationen und Vernetzer), Wasser und Salzen besteht, gezeigt. Die Starterlösung wird mit dem Dosierventil 4 in einen Fluidstrom der Gelmischung in einem definierten Verhältnis dosiert und nach dem Mechanismus der radikalischen Polymerisation reagiert die Reaktionslösung zu einem Hydrogel ab, das aus dreidimensional vernetzten Polymerketten besteht und im Polymerkettengerüst Salz und Wasser eingelagert hat.

Als Rezepturbeispiel für die Herstellung eines Natriumpolyacrylat-Hydrogels wurden dabei zu Versuchszecken folgende Lösungen eingesetzt:
Lösung 1
   230 g Acrylsäure, 99 g Natriumhydroxid, 12 g Methylenbisacrylamid, 1250 g voll entsalztes Wasser
Lösung 2
   2,3 g Ammoniumpersulfat, 2,3 g Natriummetabisulfid, 100 g voll entsalztes Wasser

Lösung 2 wurde über das Dosierventil 4 kontinuierlich im Verhältnis von einem Teil Lösung 2 zu 12,5-Teilen Lösung 1 in Lösung 1 dosiert (Temperatur der Lösungen 60 °C) und anschließend in ein Formteil als Reaktionsgefäß überführt, beispielsweise in ein Becherglas. Nach vier Stunden Lagerzeit bildete sich ein dreidimensional vernetztes Hydrogel aus. Im Rahmen des Versuchsbetriebs konnte auch bei mehrfachen Dosiervorgängen keine Entstehung von Hydrogel im und/oder am Dosierventil 4 beobachtet werden.

Fig. 5 zeigt ein Mischelement 17 mit einem ersten Anschlussstück 18 als Zugang für einen Stoffstrom 19 einer ersten reaktiven Komponente und einem zweiten Anschlusstück 5 als Zugang für einen zweiten Stoffstrom 21 einer weiteren reaktiven Komponente. Bei der ersten reaktiven Komponente kann es sich um eine Lösung handeln, die aus Monomeren (Polykationen und Vernetzer), Wasser und Salzen besteht. Insbesondere kann es sich um die Lösung 1 gemäß obigem Rezepturbeispiel handeln. Bei der zweiten reaktiven Komponente kann es sich um eine Starterlösung handeln, die aus Wasser und Radikalbildnern besteht. Insbesondere kann es sich bei der zweiten reaktiven Komponente um die Lösung 2 gemäß dem obigen Rezepturbeispiel handeln.

In das zweite Anschlussstück 5 ist ein in den Figuren 2 bis 4 gezeigtes Dosierventil 4 eingeklebt oder eingeschweißt. Das zweite Anschlusstück 5 ist mit einem Verbindungsstück 20 der Mischeinrichtung 17 verschraubt. Über ein Auslassstück 22 kann ein Stoffstrom 23 einer aus der Gelmischung und der Starterlösung gebildeten Reaktionslösung austreten. Die Mischeinrichtung 17 kann Teil eines Befüllsystems zur Befüllung von Glaszwischenräumen mit der Reaktionslösung sein.

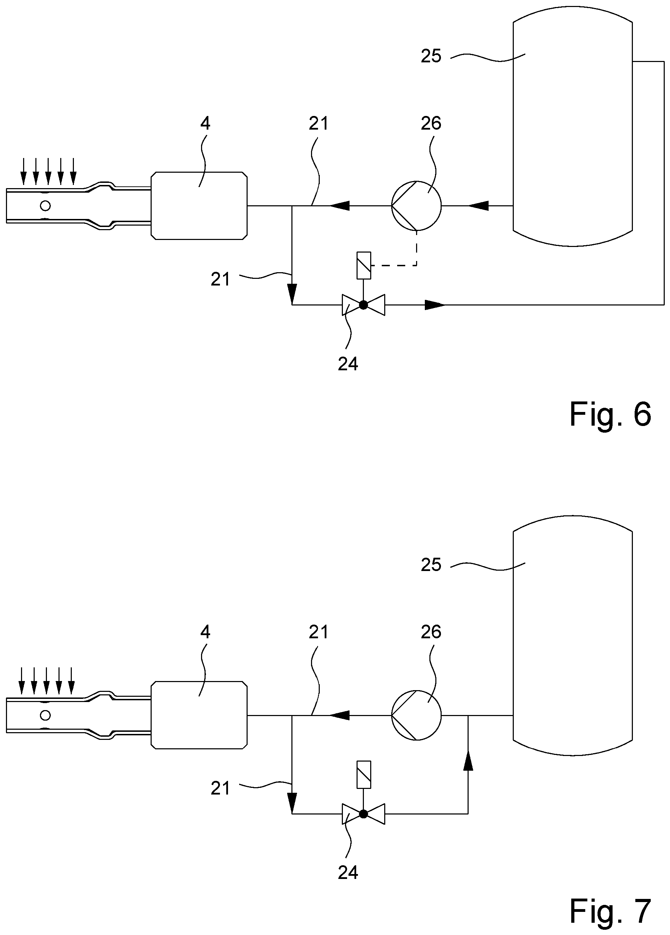

Zur Sicherstellung einer rückstandsfreien Dosierung mit dem Dosierventil 4 ist nach Beendigung eines Dosiervorgangs eine Druckentlastung des Schlauch- bzw. Rohrleitungssystems, das zum Dosierventil 4 führt, vorgesehen. Verfahrenstechnisch kann dies über die in den Figuren 6 und 7 schematisch gezeigten Verfahrensvarianten erfolgen.

Gemäß Fig. 6 ist vorgesehen, eine Druckentlastung durch Rückführung des Stoffstroms 21 der zweiten reaktiven Komponente über ein Ventil 24 in einen Vorlagebehälter 25 zu erreichen. Aus dem Vorlagebehälter 25 wird dann die zweite reaktive Komponente mit einer Pumpe 26 in der geforderten Menge dem Dosierventil 4 zugeführt.

Gemäß Fig. 7 erfolgt die Druckentlastung durch eine Bypassführung des Stoffstroms 21 vor die Pumpe 26.

### Bezugszeichenliste:

- 1: Schließelement
- 2: Kugel
- 3: Hydrogelanhaftung
- 4: Dosierventil
- 5: Anschlussstück
- 5a: Außengewinde
- 6: Dosierrohr
- 7: Verschlusselement
- 8: Durchgangsbohrung
- 9: Dosierrohrende
- 10: Pfeil
- 11: Dosierkanal
- 12: Anschlussbereich
- 13: Durchmessererweiterung
- 14: Schlauchende
- 15: Schlauchende
- 16: Schulter
- 17: Mischeinrichtung
- 18: Anschlussstück
- 19: Stoffstrom
- 20: Verbindungsstück
- 21: Stoffstrom
- 22: Auslassstück
- 23: Reaktionslösung
- 24: Ventil
- 25: Vorlagebehälter
- 26: Pumpe

## Patentansprüche

1. Mischeinrichtung (17) zur zumindest im Wesentlichen rückstandsfreien Dosierung in einem Mischprozess, bei dem eine chemische und/oder physikalische Reaktion von reaktiven Komponenten (19, 21) zur Bildung von Hydrogel führt, mit wenigstens einem nach dem Schlaucherweiterungsprinzip arbeitenden Dosierventil (4), wobei das Dosierventil (4) ein Dosierrohr (6) und ein auf dem Dosierrohr (6) aufgebrachtes elastisches, schlauchförmiges Verschlusselement (7) aufweist, wobei das Verschlusselement (7) in einem Schließ- oder Ruhezustand des Dosierventils (4) wenigstens eine Austrittsöffnung (8) des Dosierrohrs (6) gegen den Austritt eines in dem Dosierrohr (6) anstehenden Flüssigkeitsstroms verschließt und in einem Dosierbetrieb des Dosierventils (4) unter einem Dosierdruck des Flüssigkeitsstroms reversibel aufweitbar ist, um den Abfluss des Flüssigkeitsstroms über die Austrittsöffnung (8) zu ermöglichen, und wobei das Verschlusselement (7) aus einem vernetzten Elastomer, einem thermoplastischen Elastomer und/oder einem Silikon besteht und/oder ein vernetztes Elastomer, ein thermoplastisches Elastomer und/oder ein Silikon aufweist und die Härte des Verschlusselementes (7) nach DIN ISO 7619-1 zwischen 10 Shore-A bis 90 Shore-A beträgt, mit wenigstens einem mit dem Dosierventil (4) verbundenen Vorlagebehälter (25) für eine reaktive Komponente (21) und mit einer Pumpe (26) zum Zuführen der reaktiven Komponente (21) zum Dosierventil (4), **dadurch gekennzeichnet, dass** die Mischeinrichtung (17) eine Rückführung mit einem Ventil (24) aufweist, wobei für eine Druckentlastung im Dosierventil (4) am Ende eines Dosiervorgangs die reaktive Komponente (21) über die Rückführung und das Ventil (24) in den Vorlagebehälter (25) rückführbar ist und/oder wobei die Mischeinrichtung (17) eine Bypassführung aufweist, wobei die reaktive Komponente (21) für eine Druckentlastung im Dosierventil (4) über die Bypassführung in einen Leitungsabschnitt vor der Pumpe (26) rückführbar ist.

2. Verfahren zur Vermischung reaktiver Komponenten (19, 21) in einem Zwei- oder Mehrkomponenten-Mischprozess unter Verwendung der Mischeinrichtung nach Anspruch 1, bei dem eine chemische und/oder physikalische Reaktion der Komponenten (19, 21) zur Bildung von Hydrogel führt, wobei ein Stoffstrom einer reaktiven Komponente (21) und/oder eines reaktiven Komponentengemisches mit wenigstens einem nach dem Schlaucherweiterungsprinzip arbeitenden Dosierventil in den Stoffstrom einer weiteren reaktiven Komponente (19) oder den Stoffstrom eines weiteren reaktiven Komponentengemisches dosiert wird, wobei die reaktive Komponente (21) für eine Druckentlastung im Dosierventil (4) am Ende des Dosiervorgangs über eine Rückführung und ein Ventil (24) in den Vorlagebehälter (25) zurückgeführt wird und/oder wobei die reaktive Komponente (21) für eine Druckentlastung im Dosierventil (4) über eine Bypassführung in einen Leitungsabschnitt vor der Pumpe (26) zurückgeführt wird.

## Claims

1. A mixing device (17) for at least substantially residue-free metering in a mixing process in which a chemical and/or physical reaction of reactive components (19, 21) leads to the formation of a hydrogel, comprising at least one metering valve (4) operating on the tube expansion principle, wherein the metering valve (4) comprises a metering tube (6) and an elastic, tubular sealing element (7) mounted on the metering tube (6), wherein the sealing element (7), in a closed or rest state of the metering valve (4), seals at least one outlet opening (8) of the metering tube (6) against the escape of a liquid flow present in the metering tube (6) and, during a metering operation of the metering valve (4), is reversibly expandable under a metering pressure of the liquid flow to allow the liquid flow to discharge via the outlet opening (8), and wherein the sealing element (7) consists of a cross-linked elastomer, a thermoplastic elastomer and/or a silicone and/or comprises a cross-linked elastomer, a thermoplastic elastomer and/or a silicone, and the hardness of the sealing element (7) is between 10 Shore A and 90 Shore A in accordance with DIN ISO 7619-1, comprising at least one reservoir (25) connected to the metering valve (4) for a reactive component (21) and a pump (26) for supplying the reactive component (21) to the metering valve (4), **characterised in that** the mixing device (17) comprises a return line with a valve (24), wherein, for pressure relief in the metering valve (4) at the end of a metering operation, the reactive component (21) can be returned via the return line and the valve (24) into the reservoir (25) and/or wherein the mixing device (17) comprises a bypass line, whereby the reactive component (21) can be returned via the bypass line into a pipe section upstream of the pump (26) to relieve pressure in the metering valve (4).

2. A method for mixing reactive components (19, 21) in a two- or multi-component mixing process using the mixing device according to claim 1, wherein a chemical and/or physical reaction of the components (19, 21) leads to the formation of hydrogel, wherein a flow of a reactive component (21) and/or a reactive component mixture is metered into the flow of a further reactive component (19) or the flow of a further reactive component mixture using at least one metering valve operating on the tube expansion principle, wherein, for pressure relief in the metering valve (4) at the end of the metering process, the reactive component (21) is returned into the reservoir (25) via a return line and a valve (24) and/or wherein the reactive component (21) is returned via a bypass line into a pipe section upstream of the pump (26) to relieve pressure in the metering valve (4).

## Revendications

1. Dispositif de mélange (17) destiné à un dosage au moins essentiellement sans résidus dans un processus de mélange, dans lequel une réaction chimique et/ou physique de composants réactifs (19, 21) conduit à la formation d'un hydrogel, comprenant au moins une vanne de dosage (4) fonctionnant selon le principe de l'expansion du tuyau, la vanne de dosage (4) comportant un tube de dosage (6) et un élément de fermeture (7) élastique en forme de tuyau monté sur le tube de dosage (6), l'élément de fermeture (7) obturant, dans un état fermé ou de repos de la vanne de dosage (4), au moins un orifice de sortie (8) du tube de dosage (6) contre la sortie d'un flux de liquide présent dans le tube de dosage (6) et est expansible de manière réversible sous l'effet d'une pression de dosage du flux de liquide lors d'un fonctionnement en mode dosage de la vanne de dosage (4), afin de permettre l'écoulement du flux de liquide par l'orifice de sortie (8), et dans laquelle l'élément de fermeture (7) est constitué d'un élastomère réticulé, d'un élastomère thermoplastique et/ou d'un silicone et/ou comporte un élastomère réticulé, un élastomère thermoplastique et/ou un silicone, et la dureté de l'élément de fermeture (7) selon la norme DIN ISO 7619-1 est comprise entre 10 Shore A et 90 Shore A, avec au moins un réservoir de stockage (25) relié à la vanne de dosage (4) pour un composant réactif (21) et avec une pompe (26) pour acheminer le composant réactif (21) vers la vanne de dosage (4), **caractérisé en ce que** le dispositif de mélange (17) comporte un circuit de retour muni d'une vanne (24), le composant réactif (21) pouvant être renvoyé, pour une décompression dans la vanne de dosage (4) à la fin d'un processus de dosage, via le circuit de retour et la vanne (24) vers le réservoir de stockage (25) et/ou le dispositif de mélange (17) comportant une conduite de dérivation, le composant réactif (21) pouvant être renvoyé, pour une décompression dans la vanne de dosage (4), via la conduite de dérivation vers un tronçon de conduite situé en amont de la pompe (26).

2. Procédé de mélange de composants réactifs (19, 21) dans un processus de mélange à deux ou plusieurs composants utilisant le dispositif de mélange selon la revendication 1, dans lequel une réaction chimique et/ou physique des composants (19, 21) conduit à la formation d'un hydrogel, un flux de matière d'un composant réactif (21) et/ou d'un mélange de composants réactifs est dosé, à l'aide d'au moins une vanne de dosage fonctionnant selon le principe de l'expansion du tuyau, dans le flux de matière d'un autre composant réactif (19) ou dans le flux de matière d'un autre mélange de composants réactifs, le composant réactif (21) étant renvoyé vers le réservoir de stockage (25) via un circuit de recirculation et une vanne (24) à la fin du processus de dosage afin de décharger la pression dans la vanne de dosage (4) est renvoyé, à la fin du processus de dosage, via un circuit de retour et une vanne (24) vers le réservoir de stockage (25) et/ou le composant réactif (21) est renvoyé, pour une décompression dans la vanne de dosage (4), via un circuit de dérivation vers un tronçon de conduite situé en amont de la pompe (26).
